Europäisches Patentamt

European Patent Office

Office européen des brevets

(19)

(11) Veröffentlichungsnummer: **0 305 575**

**A1**

(12) # EUROPÄISCHE PATENTANMELDUNG

(21) Anmeldenummer: 87112894.8

(22) Anmeldetag: 03.09.87

(51) Int. Cl.4: **B01D 29/02 , B01D 29/38**

(43) Veröffentlichungstag der Anmeldung:
08.03.89 Patentblatt 89/10

(84) Benannte Vertragsstaaten:
AT BE CH DE ES FR GB GR IT LI LU NL SE

(71) Anmelder: **BAUKO BAUKOOPERATION GMBH
Münchner Bundesstrasse 34
A-5020 Salzburg(AT)**

(72) Erfinder: **Kupka, Dieter
Donauwörther Strasse 47
D-8852 Rain/Lech(DE)**
Erfinder: **Kupka, Martin
Im Sien 41
D-6571 Griebelschied(DE)**

(74) Vertreter: **Körner, Ekkehard, Dipl.-Ing.
Patentanwalt Maximilianstrasse 58
D-8000 München 22(DE)**

(54) **Filterapparat.**

(57) Es wird ein Filterapparat angegeben, der eine
über dem Filtermittel umlaufende Glattstreichvorrichtung aufweist. Der Abstand zwischen dem Filtermittel
und der Glattstreichvorrichtung kann durch Heben
und Senken eines das Filtermittel tragenden Zwischenbodens verändert werden, wobei die abgesenkte Stellung einer Filtrierstellung entspricht, und
die angehobene Stellung einer Ausräumstellung entspricht, in der mittels der Glattstreichvorrichtung der
Filterkuchen von dem Filtermittel abgeräumt wird.
Durch eine an einer geeigneten Stelle ausgebildete
Auslaßöffnung kann der Filterkuchen aus dem Filterapparat mechanisch ausgeräumt werden, ohne daß
es notwendig ist, den Filterapparat zu kippen. Infolge
der Beweglichkeit des Zwischenbodens ist es nicht
notwendig, daß die Antriebswelle für die Glattstreichvorrichtung axial verschiebbar ist. Die Wellendurchführung an der Antriebsachse kann daher als eine
einfache Gleitringdichtung ausgebildet werden.

FIG.1

# Filterapparat

Die vorliegende Erfindung bezieht sich auf einen Filterapparat, bestehend aus einem aufrechtstehenden, im wesentlichen rotationssymmetrischen, geschlossenen Gehäuse mit wenigstens einer Öffnung im oberen Bereich für die Zuführung der zu filternden Trübe, wenigstens einer Öffnung im Bereich des Gehäusebodens für den Auslaß des Filtrats, einem von einem Zwischenboden in dem Gehäuse abgestützten Filtermittel, das den Gehäuseinnenraum in eine obere Trübenkammer und eine untere Filtratkammer unterteilt, und eine in der Trübenkammer angeordnete, benachbart zum Filtermittel umlaufende Glattstreichvorrichtung für den sich im Betrieb des Filterapparats auf dem Filtermittel aufbauenden Filterkuchen, die eine in der Gehäuseachse verlaufende Antriebswelle aufweist, die durch die obere Gehäusewand geführt und dort mittels einer Wellendichtung abgedichtet ist.

Filterapparate dieser Art sind allgemein bekannt. Sie haben im allgemeinen eine waagerechte Filterfläche, beispielsweise ein mit Filtertuch bespanntes Sieb oder eine feste poröse Platte als Filtermittel und Zwischenboden, wobei der Feststoffaustrag durch Umkippen des gesamten Filterapparates, durch Abklappen des Bodens oder durch Ausschaufeln erfolgt. Zur Vermeidung einer Rißbildung im Filterkuchen, die beim Waschen und Trocknen dazu führt, daß der Filterkuchen nicht gleichmäßig von der Waschflüssigkeit bzw. Druckluft durchströmt werden kann, ist die umlaufende Glattstreichvorrichtung vorgesehen, die bei bekannten Filterapparaten dieser Art häufig axial verstellbar ist, zu welchem Zweck die Wellendurchführung in der oberen Gehäusewand eine spezielle, relativ aufwendige Abdichtungstechnik verlangt, die einerseits druckfest sein muß, andererseits eine axiale und rotierende Bewegung der Welle erlauben muß.

Das Kippen des gesamten Filterapparates zum Zwecke der Entleerung erfordert sehr stabile und daher schwere Abstützeinrichtungen, eine daran angepaßte Gehäusekonstruktion und einen kräftigen Antrieb für die Hervorbringung der Kippbewegung, wenn es sich um einen Filterapparat für industrielle Zwecke handelt, der ein großes Volumen aufweist und entsprechend schwer ist. Wollte man den Boden abklappen, müßte unter dem Filterapparat ein entsprechender freier Raum vorgesehen sein, und außerdem müßten sämtliche Anschlüsse, die an dem Gehäuseboden angebracht sind, von diesem gelöst werden, was auch für einen Filterapparat gilt, der zum Zwecke des Entleerens umgekippt werden muß.

Der Erfindung liegt die Aufgabe zugrunde, einen Filterapparat der eingangs genannten Art anzugeben, bei dem der Filterkuchen auf einfache Weise und schnell ausgeräumt werden kann, ohne daß der Apparat gekippt oder der Gehäuseboden und der Filterboden abgeklappt werden müssen.

Diese Aufgabe wird durch die kennzeichnenden Merkmale des Anspruchs 1 gelöst. Vorteilhafte Ausgestaltungen der Erfindung sind Gegenstand der Unteransprüche.

Es ist ein hervorstechendes Merkmal der vorliegenden Erfindung, daß der Zwischenboden mit dem Filtermittel in dem Gehäuse längs der Gehäuseachse verschiebbar ist. In einer ersten, abgesenkten Stellung wird auf dem Filtermittel der Filterkuchen aufgebaut, wobei während des Filtervorgangs die Trübe von der in einer bestimmten ersten Richtung rotierenden Glattstreichvorrichtung in Bewegung gehalten wird, wodurch sich eine Querstromfilterung einstellen kann. Gegen Ende des Filtervorgangs wird der auf dem Filtermittel aufgebaute Filterkuchen von der Glattstreichvorrichtung, in entgegengesetzter, zweiter Richtung rotierend, glattgestrichen, so daß sich keine Risse darin ausbilden können. In einer zweiten, angehobenen Stellung des Zwischenbodens mit dem Filtermittel gelangt die Glattstreichvorrichtung, nun wieder in der ersten Richtung rotierend, mit dem Filterkuchen derart in Eingriff, daß dieser von der Glattstreichvorrichtung von dem Filtermittel abgeräumt wird. Dies vollzieht sich besonders günstig dann, wenn die Glattstreichvorrichtung Flügel aufweist, die so gestaltet sind, daß sie in der einen Drehrichtung einen Glattstreicheffekt hervorrufen, in der umgekehrten Drehrichtung jedoch den Filterkuchen vom Filtermittel abheben.

Zum Entfernen des Filterkuchens aus dem Filterapparat kommen gemäß der Erfindung zwei alternative Möglichkeiten in Betracht. Bei der einen Lösungsvariante sind Zwischenboden und Filtermittel trichterförmig ausgeführt und weisen an ihrer tiefsten, zentralen Stelle eine Öffnung auf, die in der abgesenkten Stellung des Zwischenbodens von einem am Gehäuseboden abgestützten Kegelkörper verschlossen ist, der in diese Öffnung hineinragt. In der angehobenen Stellung des Zwischenbodens wird diese Öffnung freigegeben, so daß der vom Filtermittel abgehobene Filterkuchen unter Schwerkraftwirkung nach unten aus dem Filterapparat herausfallen kann. Bei der zweiten Lösungsvariante sind der Zwischenboden und das Filtermittel kegelförmig gestaltet, wobei die Kegelspitze nach oben weist, und ist in der seitlichen Gehäusewand eine verschließbare Öffnung angeordnet, durch die der Filterküchen ausgeräumt werden kann. Diese Öffnung befindet sich in dem Bereich, in dem sich der äußere Umfang des Zwischenbodens in der angehobenen Stellung befindet.

Zum Erleichtern des Ausräumens ist es günstig, wenn der Zwischenboden mit dem davon abgestützten Filtermittel eine Neigung aufweist, die zwischen 30 und 60°, vorzugsweise bei 45° liegt. Diese Neigung vergrößert zugleich die wirksame Filterfläche in bezug auf jene, die sich ergeben würde, wenn das Filtermittel eben wäre.

Ein besonderer Vorteil der Erfindung besteht darin, daß die Glattstreichvorrichtung nicht in axialer Richtung verfahrbar zu sein braucht, um sie mit dem Filterkuchen zum Zwecke des Ausräumens in Eingriff zu bringen. Die Wellendichtung an der Wellendurchführung läßt sich daher als eine einfache Gleitringdichtung ausführen.

Es ist vorteilhaft, wenn die Flügel der Glattstreichvorrichtung austauschbar oder verstellbar sind, weil dann die Glattstreichvorrichtung unterschiedlichen Prozeßphasen und unterschiedlichen Trübenarten angepaßt werden kann. Vorteilhaft ist es auch, wenn an der Antriebswelle der Zustreichvorrichtung weitere Flügel angebracht sind, mit deren Hilfe die Trübe in Bewegung gehalten werden kann und die Prozeßphasen, wie beispielsweise Dispergieren, Suspendieren, Homogenisieren und dergleichen individuell beeinflußt werden können.

Die Erfindung und weitere Merkmale und vorteilhafte Ausgestaltungen derselben werden nachfolgend unter Bezugnahme auf in den Zeichnungen dargestellte Ausführungsformen näher erläutert. Es zeigt:

Fig. 1 einen Filterapparat mit trichterförmigem Zwischenboden gemäß einer ersten Ausführungsform der Erfindung;

Fig. 2 einen Filterapparat mit trichterförmigem Zwischenboden gemäß einer zweiten Ausführungsform der Erfindung;

Fig. 3 einen Schnitt durch den Filterapparat längs der Linie III-III von Fig. 2;

Fig. 4 ausschnittsweise einen Filterapparat ähnlich Fig. 2 mit einer modifizierten Ausführungsform einer Hubvorrichtung für den Zwischenboden;

Fig. 5 eine Darstellung des Filterapparates nach Fig. 2 zur Erläuterung der Lage der Auslaßöffnung für den Filterkuchen;

Fig. 6 die Einzelheit A von Fig. 2;

Fig. 7 die Einzelheit B von Fig. 2;

Fig. 8 die Einzelheit C von Fig. 5, und

Fig. 9 jeweils als Ausschnitt modifizierte Ausführungsformen von Vorrichtungen zur Abdichtung des Zwischenbodens an der Behälterwand.

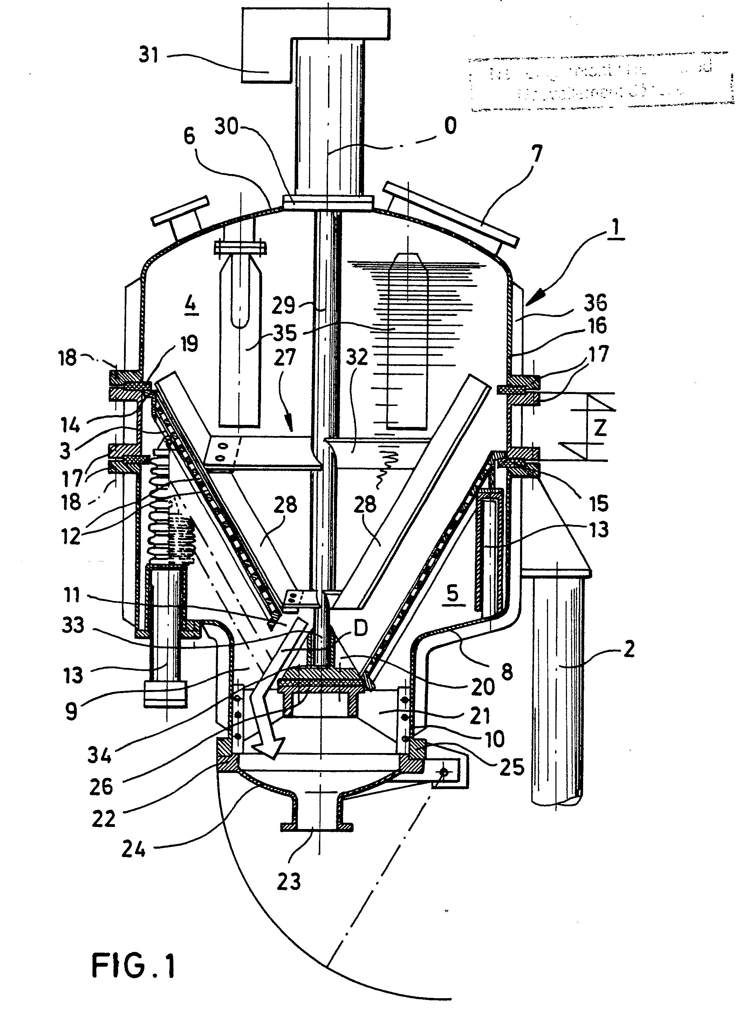

Fig. 1 zeigt eine Ausführungsform eines Filterapparates nach der vorliegenden Erfindung, der besonders als "Konzentrator" für die Verarbeitung von Trüben mit Feststoffgehalt unterschiedlicher Teilchengrößen geeignet ist. Der Filterapparat umfaßt ein Gehäuse 1 etwa drehsymmetrischer Gestalt mit aufrechtstehender Gehäuseachse O, das durch Stützen 2 auf einem Boden (nicht dargestellt) abgestützt ist. In der Zeichnung ist aus Übersichtlichkeitsgründen nur eine der Stützen 2 dargestellt, doch sei betont, daß üblicherweise mehrere solcher Stützen vorhanden sind. Der Innenraum des Gehäuses 1 ist durch einen Zwischenboden 3 trichterförmiger Gestalt in eine obere Trübenkammer 4 und eine untere Filtratkammer 5 unterteilt. Die obere Gehäusewand 6 des Gehäuses 1 ist mit einer Einlaßöffnung 7 für die Zuführung der zu filternden Trübe versehen. Am Boden 8 des Gehäuses 1 ist zentrisch eine Auslaßöffnung 9 ausgebildet, die im vorliegenden Beispiel von einem rohrförmigen Stutzen 10, der einstückig mit dem Gehäuseboden 8 verbunden ist, umgeben ist.

Der Zwischenboden 3 trichterförmiger Gestalt weist an seinem unteren Ende eine Auslaßöffnung 11 auf. Er hat somit etwa die Gestalt eines umgekehrten Kegelstumpfes. Der Zwischenboden 3 ist mit einer Vielzahl von Durchlaßöffnungen 12 versehen, die dem Durchtritt des Filtrats dienen. Der Zwischenboden 3 kann selbst ein Sieb sein und somit zugleich das Filtermittel bilden, es kann auf ihm aber auch ein Filtertuch kegelstumpfförmiger Gestalt (nicht dargestellt) aufgelegt sein, das als Filtermittel dient.

Der Zwischenboden 3 ist von unten durch mehrere Hydraulikeinheiten 13 abgestützt, von denen in Fig. 1 zwei dargestellt sind. Mit Hilfe dieser Hydraulikeinheiten 13 ist der Zwischenboden 3 zwischen einer unteren Stellung, die die Filtrierstellung darstellt, und einer oberen Stellung, die die Ausräumstellung darstellt, längs der Achse O des Gehäuses 1 verschiebbar. In Fig. 1 ist in der rechten Hälfte der Zeichnung die Filtrierstellung des Zwischenbodens 3 dargestellt, während in der linken Hälfte der Zeichnung die Ausräumstellung des Zwischenbodens 3 dargestellt ist. Die Filtrierstellung ist dort mit gestrichelten Linien eingezeichnet. Die Hydraulikeinheiten 13 sind am Gehäuseboden 8 befestigt, beispielsweise angeschraubt. Der Maximalhub, den der Zwischenboden 3 ausführen kann, ist in Fig. 1 mit dem Doppelpfeil Z gekennzeichnet.

An seinem äußeren Rand weist der Zwischenboden 3 einen sich radial nach außen erstreckenden Flanschring auf. Dieser liegt in der abgesenkten Stellung des Zwischenbodens von oben auf einem unteren elastischen Dichtungsring 15 auf, der an der Seitenwand 16 des Gehäuses 1 befestigt ist, und zwar im vorliegenden Falle zwischen zwei Flanschringen 17 des mehrteilig ausgebildeten Gehäuses, an denen mittels Schraubbolzen, durch strichpunktierte Linien 18 symbolisch dargestellt, die Gehäuseteile zusammengehalten sind. In der oberen Stellung des Zwischenbodens 3 liegt sein Flanschring 14 von unten an einem oberen Dichtungsring 19 an, der in zum Dichtungsring 15 vergleichbarer Weise zwischen Gehäuseflanschringen 17 eingespannt ist und ebenfalls aus einem elastischen Dichtungsmaterial besteht.

In der Gehäuseöffnung 9 ist zentrisch ein Kegelkörper 20 angeordnet, der von mehreren radial erstreckten Rippen 21 von unten abgestützt ist. Diese Rippen 21 sitzen in der unteren Gehäuseöffnung 9 und sind dort in geeigneter Weise festgelegt. Im in der Zeichnung dargestellten Ausführungsbeispiel sind die Rippen 21 von unten vom Rand 22 eines mit einer Auslaßöffnung 23 versehenen Deckels 24 abgestützt, welcher Deckel an einem Flansch 25 am unteren Ende des Stutzens 10 schwenkbar befestigt ist, der als Verlängerung des Gehäusebodens 8 die Öffnung 9 umgibt. Gewünschtenfalls können die Rippen in der Auslaßöffnung 9 zusätzlich durch Schrauben oder dergleichen (nicht dargestellt) befestigt sein.

In der abgesenkten Stellung des Zwischenbodens 3 liegt der innere Rand seiner Öffnung 11 am unteren Rand des Kegelkörpers 20 abdichtend an. Zur Verbesserung der Dichtungswirkung kann an dem Kegelkörper 20 ein Dichtungsring 26 aus einem elastischen Material, beispielsweise Gummi, angeordnet sein, wie dargestellt.

Im Gehäuse 1 ist eine Glattstreichvorrichtung 27 angeordnet, mit wenigstens zwei Flügeln 28, die im wesentlichen parallel zur Oberseite des Zwischenbodens 3 verlaufen, in Drehrichtung gesehen mit der Oberfläche des Zwischenbodens 3 jedoch einen Winkel einschließen, der beispielsweise in der Größenordnung zwischen 20 und 50° liegt. Die Flügel 28 sind an einer Antriebswelle 29 befestigt, deren Achse mit der Gehäuseachse O zusammenfällt und die mittels einer Gleitringdichtung 30 durch die obere Gehäusewand 6 geführt und von einem Elektromotor 31 antreibbar ist. Gegen eine seitliche Bewegung sind die Flügel 28 durch schräggestellte, radial verlaufende Verbindungsflügel 32 versteift, die an der Antriebswelle 29 abgestützt sind. Die Antriebswelle 29 trägt an ihrem unteren Ende einen Zapfen 33, der in einer Sackbohrung 34 sitzt, die von oben in den Kegelkörper 20 eingebracht ist und eine seitliche Abstützung der Antriebswelle 29 an ihrem freien Ende bewirkt.

An der oberen Gehäusewand 6 sind im dargestellten Beispiel weiterhin mehrere Strömungsleitelemente 35 befestigt, die in die Trübenkammer 4 hineinragen und die Strömung der Trübe in der Trübenkammer beeinflussen.

Gegebenenfalls kann das Gehäuse, wie dargestellt, von einem Mantel 36 umgeben sein, durch das ein Temperiermedium zirkuliert werden kann.

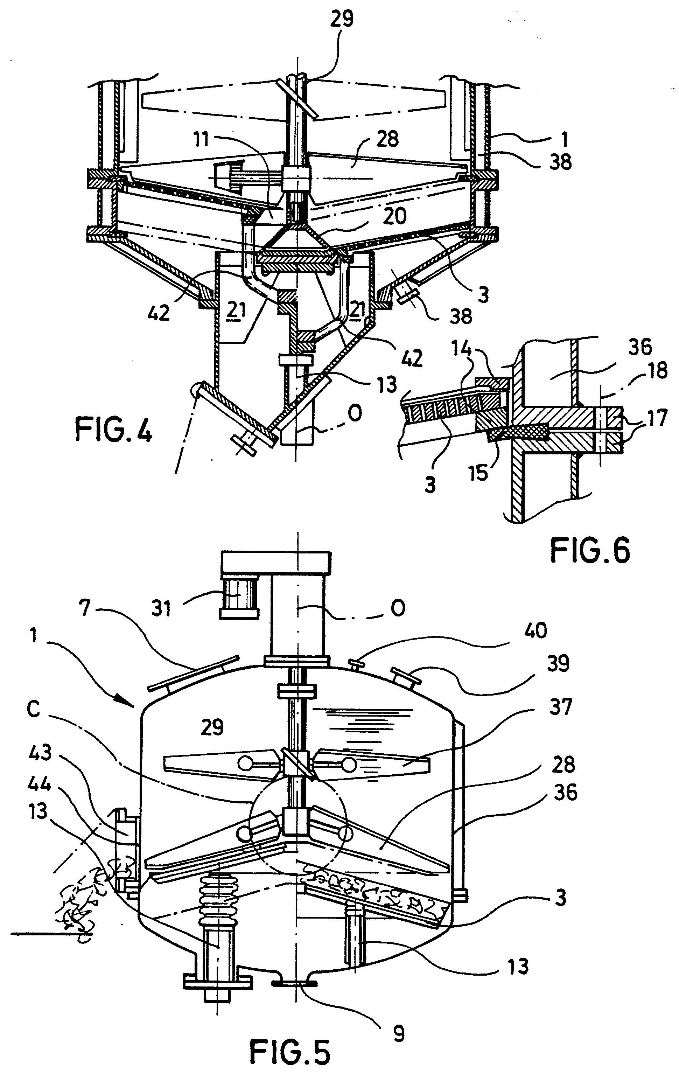

Im Betrieb des Filterapparates wird der Zwischenboden 3 mittels der Hydraulikeinheiten 13, die insbesondere mit Druckwasser betrieben werden, zunächst in die abgesenkte Stellung gebracht, die in der rechten Hälfte der Fig. 1 dargestellt ist. In dieser Stellung liegt der innere Rand der unteren Öffnung 11 des Zwischenbodens 3 an dem Dichtungsring 26 im unteren Randbereich des Kegelkörpers 20 dichtend an und liegt der Flanschring 14 von oben auf dem unteren Dichtungsring 15, der an der Gehäusewand verspannt ist, dichtend auf (vgl. auch Fig. 6). In dieser Stellung des Zwischenbodens wird durch die Einlaßöffnung 7 Trübe in die Trübenkammer 4 eingefüllt und laufend nachgefüllt. Unter ständigem Umlauf der Glattstreichvorrichtung 27 in einer ersten Drehrichtung wird nun der Filtervorgang ausgeführt, wobei das Filtrat durch die Durchlaßöffnungen 12 durch den Zwischenboden in die Filtratkammer 5 fließt und von dort durch die Zwischenräume zwischen den Rippen 21, die den Kegelkörper 20 abstützen, nach unten zur Auslaßöffnung 23 abfließt. Durch die Umlaufbewegung der Glattstreichvorrichtung 27 in der einen (ersten) Richtung wird die Trübe in Bewegung gehalten und gleichzeitig ein vorschnelles Absetzen der Feststoffpartikel auf dem Zwischenboden 3 vermieden (Querstromfilterung). Mit fortschreitendem Filtervorgang baut sich auf dem Zwischenboden 3 gleichmäßig ein Filterkuchen auf, der gegen Ende des Filtervorgangs von den Flügeln 28, in entgegengesetzter, zweiter Richtung drehend glattgestrichen wird. Wenn der Filterkuchen eine ausreichende Dicke erreicht hat, wird der Filtervorgang beendet und wird in die Trübenkammer 4 ein Gas, z.B. Druckluft eingeblasen, das bzw. die den Filterkuchen trocknet. Das Gas kann ggf. erwärmt sein. Anschließend wird mit Hilfe der Hydraulikeinheiten 13 der Zwischenboden angehoben, wobei gleichzeitig die Glattstreichvorrichtung im ersten Drehsinn angetrieben wird. Aufgrund der Gestaltung der Flügel 28, die so gewählt ist, daß sie einen Anstellwinkel gegen die Oberfläche des Zwischenbodens aufweisen, der den Filterkuchen vom Zwischenboden abhebt, wird der Filterkuchen gelockert und vom Zwischenboden allmählich abgeschabt. Unter Schwerkraftwirkung fallen die Filterkuchenstücke durch den ringförmigen Spalt, der durch das Anheben des Zwischenbodens zwischen dessen Rand an der unteren Öffnung 11 und dem Kegelkörper 20 ausgebildet wird, und durch die Zwischenräume zwischen den Rippen 21 in die Auslaßöffnung 23, was in Fig. 1 mit dem Pfeil D gekennzeichnet ist.

Falls Verstopfungen auftreten, kann der Deckel 24 vom Flanschring 25 abgeschwenkt werden. Falls es erforderlich sein sollte, kann nun auch der Kegelkörper 20 zusammen mit den sie abstützenden Rippen 21 nach unten aus der Auslaßöffnung 9 des Gehäuses 1 herausgenommen werden. Die Filtratkammer 5 und durch die Öffnung 11 im Zwischenboden auch die Trübenkammer 4 sind dann von unten zugänglich.

Der in der Zeichnung dargestellte mehrteilige Aufbau des Gehäuses 1 macht bei Zerlegung des Gehäuses 1 auch den Zwischenboden 3 von oben leicht zugänglich, so daß ein auf dem Zwischenboden 3 ggf. liegendes Filtertuch unschwierig ausgewechselt werden kann.

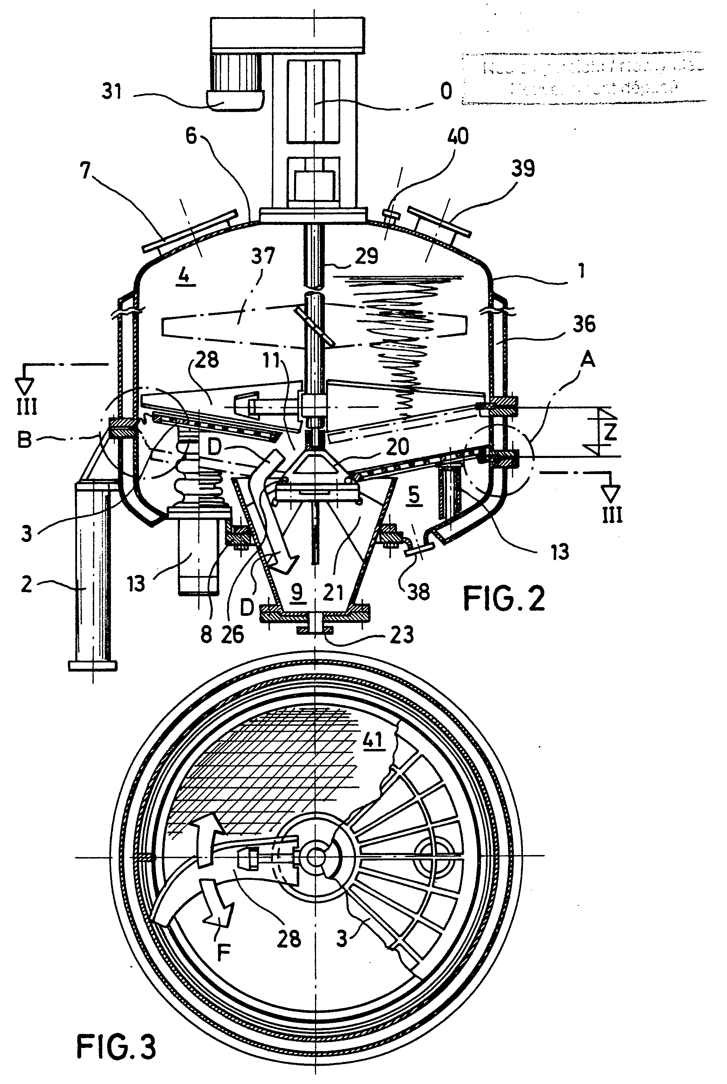

Fig. 2 zeigt eine ähnliche Ausführungsform der Erfindung, bei der der Zwischenboden 3 eine vergleichsweise geringe Neigung gegen die Horizontale aufweist. Bei dieser Ausführungsform der Erfindung sind im übrigen die einander entsprechenden Teile, die unter Bezugnahme auf Fig. 1 bereits beschrieben worden sind, mit den gleichen Bezugzeichen versehen, die schon in Fig. 1 verwendet worden sind.

Bei dieser Ausführungsform ist am Boden 8 des Gehäuses 1 ein trichterförmiger Auslaß 9 befestigt, in welchem wiederum, mittels Rippen, ein Kegelkörper 20 abgestützt ist, an welchem der innere Rand der unteren Öffnung 11 des Zwischenbodens 3 anliegt, wenn dieser sich in der Filtrierungsstellung befindet, die in Fig. 2 in der rechten Hälfte dargestellt ist. Die Glattstreichvorrichtung weist im dargestellten Beispiel speziell gestaltete Flügel 28 auf, die in einem Teilbereich in Umlaufrichtung (bzw. entgegen der Umlaufrichtung) gekrümmt sind, siehe hierzu Fig. 3. Außerdem weisen die Flügel 28 einen Anstellwinkel gegen die Oberfläche des Zwischenbodens 3 auf.

In axialem Abstand zu den Flügeln 28 können, wie Fig. 2 zeigt, weitere Flügel 37 an der Antriebswelle 26 befestigt sein, die bei Rotation der Antriebswelle 29 zusätzlich Bewegung in der Trübe hervorrufen.

Da beim dargestellten Beispiel der trichterförmige Auslaß 9 in die Filtratkammer 5 hineinragt, ist diese am Gehäuseboden 8 mit einem Filtratauslaß 38 versehen. Die Abdichtung des Zwischenbodens 3 an der Gehäusewand kann, wie in der rechten Hälfte von Fig. 2 dargestellt, in der gleichen Weise erfolgen, wie in Fig. 1 dargestellt, d.h. mittels Dichtungsringen 15 und 19, die in der Gehäusewand befestigt sind, oder, wie die später noch zu erläuternde Einzelheit B in der linken Hälfte der Fig. 2 zeigt, mittels einer flexiblen Membran.

Fig. 2 zeigt weiterhin einen Einlaß 39 für eine Waschflüssigkeit und einen Drucklufteinlaß 40 an der oberen Gehäusewand.

Wie Fig. 3 als Schnittansicht längs der Linie III-III von Fig. 2 zeigt, liegt im dargestellten Beispiel auf dem Filterboden 3 ein Filtermittel in Form eines Filtertuches 41, das in Fig. 3 teilweise weggebrochen ist, um den darunterliegenden Zwischenboden 3 zu zeigen. Im Betrieb arbeitet dieser Filterapparat wie der nach Fig. 1, wobei während des Filterbetriebs die Glattstreichvorrichtung in Draufsicht gesehen zunächst entgegen dem Uhrzeigersinn, gegen Ende des Filtervorgangs zum Glattstreichen jedoch im Uhrzeigersinn umläuft, entsprechend dem Pfeil E in Fig. 3. Zum Abräumen des Filterkuchens wird unter Anhebung des Zwischenbodens die Glattstreichvorrichtung wieder entgegen dem Uhrzeigersinn, d.h. in Richtung des Pfeiles F in Fig. 3 angetrieben, wodurch aufgrund der aus Fig. 3 ersichtlichen Gestaltung der Flügel 28 den abgeräumten Filterkuchenstücken eine in Richtung auf das Umlaufzentrum weisende Bewegungskomponente vermittelt wird, die dazu führt, daß die abgeräumten Filterkuchenstücke auch aus dem äußeren Randbereich des Zwischenbodens in Richtung auf die Öffnung 9 gefördert werden, so daß die relativ geringe Neigung des Zwischenbodens 3 im dargestellten Beispiel keine nachteiligen Folgen hat.

Während des Filterbetriebes fließt das Filtrat hauptsächlich aus dem Auslaß 38, in geringem Umfang aber auch durch den trichterförmigen Auslaß 9 und die Auslaßöffnung 23 ab. Der Filterkuchen hingegen gelangt beim Ausräumbetrieb ausschließlich in den trichterförmigen Auslaß 9.

Zeigten die vorgenannten Beispiele eine Abstützung des Zwischenbodens 3 mittels mehrerer hydraulischer Einheiten 13, die nahe dem äußeren Rand des Zwischenbodens 3 an diesem angreifen, so zeigt Fig. 4 eine Ausführungsform, bei der der Zwischenboden 3 mittels einer einzigen Hydraulikeinheit 13 abgestützt ist, die in der Achse O des Gehäuses 1 angeordnet ist. Der Stempel der Hydraulikeinheit 13 trägt in diesem Falle an seinem freien Ende mehrere Arme 42, die durch die Zwischenräume zwischen den den Kegelkörper 20 abstützenden Rippen 21 greifen und am Rand der Öffnung 11 des Zwischenbodens 3 befestigt sind. Im übrigen entspricht diese Ausführungsform nach Fig. 4 im wesentlichen der Ausführungsform nach den Fig. 2 und 3. Entsprechend ist auch ihre Betriebsweise völlig mit der nach den Fig. 2 und 3 vergleichbar.

Fig. 5 zeigt eine Ausführungsform der Erfindung, bei der der Zwischenboden 3 nicht trichterförmig, sondern kegelförmig gestaltet ist, wobei die Spitze des Kegels in der Achse O des Gehäuses 1 liegt, wobei die Filterfläche zum Rand hin nach unten abfällt. Wie bei den vorangehend erläuterten Beispielen ist der Zwischenboden 3 von unten mittels Hydraulikeinheiten 13 abgestützt und in der Höhe innerhalb des Gehäuses 1 verstellbar. Die rechte Hälfte von Fig. 5 zeigt den Zwischenboden 3 in seinem abgesenkten Zustand, den er während des Filtrierens einnimmt, während die linke Hälfte der Figur den Zwischenboden im angehobenen Zustand zeigt, den er einnimmt, wenn der Filterkuchen ausgeräumt werden soll. Bei dieser Ausführungsform der Erfindung fehlt der Kegelkörper im Zentrum des Gehäuses 1, da der Zwischenboden keine mittlere Öffnung hat, die während des Filtrierbetriebes von dem Kegelkörper zu verschließen wäre. Stattdessen weist die seitliche Gehäusewand im Bereich des Höhenniveaus, den der Zwischenboden 3 in der angehobenen Stellung einnimmt, einen von einem abnehmbaren Deckel 43 verschlossenen Auslaß 44 auf, durch den der Filterkuchen ausgeräumt werden kann, wenn der Zwischenboden 3 mittels der Hydraulikeinheiten 13 angehoben wird. Auch bei diesem Ausführungsbeispiel der Erfindung sind die Flügel 28 der Glattstreichvorrichtung vorzugsweise in spezieller Weise gestaltet, insbesondere in der Art, wie sie in Fig. 3 dargestellt ist, um das Hinausdrängen der Filterkuchenstücke aus dem Filterapparat in der Entleerungsphase des Betriebs zu begünstigen.

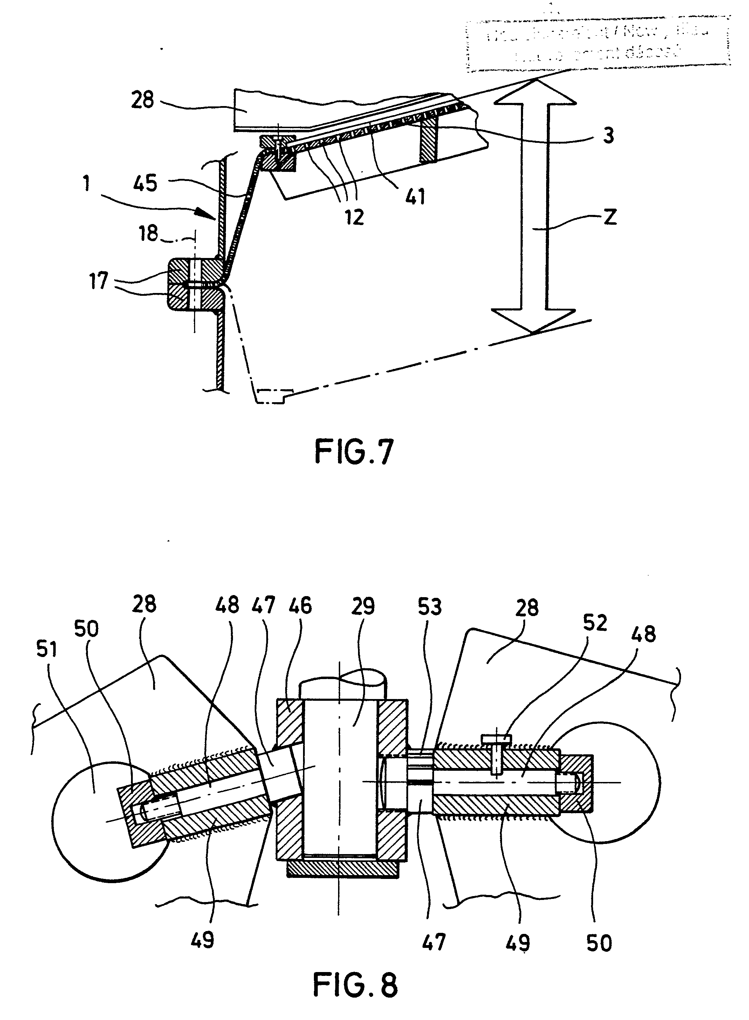

Fig. 5 zeigt weiterhin eine Art der Abdichtung zwischen dem Zwischenboden 3 und der seitlichen Gehäusewand, wie sie auch als Einzelheit B in der linken Hälfte von Fig. 2 dargestellt ist. Diese Einzelheit soll unter Bezugnahme auf Fig. 7 näher erläutert werden.

Gemäß Fig. 7 ist am Rand des mit einem Filtermittel 41 belegten Zwischenbodens 3 der innere Rand einer ringförmigen, flexiblen Membran 45 befestigt, deren äußerer Rand zwischen zwei Flanschen 17 eingespannt ist, die zwei Teile des Gehäuses 1 miteinander verbinden. In der in Fig. 7 dargestellten Stellung befindet sich der Zwischenboden 3 in seiner höchsten Lage, während die tiefste Lage strichpunktiert eingezeichnet ist und der Doppelpfeil Z den Maximalhub des Zwischenbodens 3 angibt.

Die Membran 45 kann auch einstückig mit dem Filtermittel 41 ausgebildet sein, sofern das Material dazu geeignet ist, im Bereich zwischen dem äußeren Rand des Zwischenbodens 3 und der Einspannstelle zwischen den Flanschen 17 dem zwischen der Trübenkammer 4 und der Filtratkammer 5 herrschenden Druckunterschied zu widerstehen.

Fig. 5 zeigt als Einzelheit C weiterhin eine verstellbare Anbringung der Flügel 28 an der Antriebswelle 29. Dieselbe Art der Anbringung kann auch für die Flügel 37 verwendet werden, die in axialem Abstand zu den Zustreichflügeln 28 an der Antriebswelle 29 befestigt sind. Die Einzelheit C ist mit zwei alternativen Ausführungsformen in Fig. 8 dargestellt.

Fig. 8 zeigt die Antriebswelle 29, an der direkt oder, wie im dargestellten Beispiel mittels einer Anschweißnabe 46 ein Justierbolzen 47 angeschweißt ist, von welchem sich im wesentlichen radial zur Antriebswelle 29 ein Zapfen 48 erstreckt, der endseitig mit einem Gewinde versehen ist. Auf dem Zapfen 48 ist eine Muffe 49 aufgesteckt, die sich am einen Ende an den Justierbolzen 47 anlegt und am anderen Ende mittels einer auf den Zapfen 48 aufgeschraubten Mutter 50 am Zapfen 48 festgelegt ist. An der Muffe ist in einer Axialebene ein Flügel 28 befestigt, der im Bereich des Muffenendes, an welchem die Mutter 50 anliegt, einen Durchbruch 51 aufweist, an welchem die Mutter 50 zugänglich ist. Durch Lösen der Mutter 51 kann der Flügel 28 auf dem Zapfen 48 verdreht und in einer ausgewählten Stellung durch Festziehen der Mutter 50 festgelegt werden.

Galt die vorstehende Beschreibung der linken Hälfte der Fig. 8, so zeigt die rechte Hälfte derselben eine zusätzliche Verdrehungssicherung der Muffe 49 auf dem Zapfen 48 mit Hilfe einer Konterschraube 52, für die ggf. Sackbohrungen an passenden Winkelstellungen im Zapfen 48 vorgesehen sind. Markierungen 53 am Umfang des Justierbolzens 47 erleichtern das Einstellen des Flügels 28.

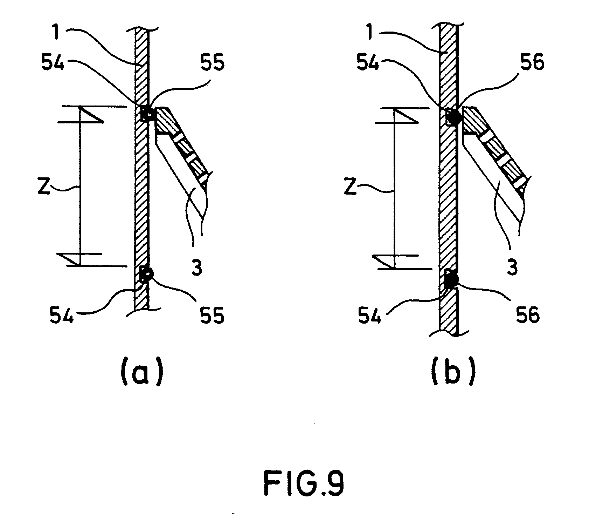

Fig. 9 zeigt in zwei verschiedenen Varianten weitere Ausführungsformen für die Abdichtung an der Wand des Behälters 1 wenigstens in den unteren und oberen Endstellungen des Zwischenbodens 3. Gemäß Fig. 9a sind an der Behälterwand mit geeigneten Mitteln, beispielsweise mittels Nuten 54 Blähkörperdichtungen 55 gehalten, von denen im dargestellten Beispiel die obere Dichtung, an der sich gerade der Zwischenboden 3 befindet, aufgebläht ist, um den Spalt zwischen der Gehäusewand und dem Rand des Zwischenbodens 3 zu schließen, während die untere Blähkörperdichtung 55 nicht aufgebläht ist. Die Zuleitungen zur Zuführung eines Druckfluides in den Innenraum der Blähkörperdichtungen 55 sind im vorliegenden Falle nicht dargestellt, da der Fachmann diesbezüglich keine weiteren Erläuterungen benötigt.

Fig. 9b zeigt eine Ausführungsform, bei der Ringnuten schwalbenschwanzförmigen Querschnitts in der inneren Gehäusewand an den Stellen angebracht sind, an denen eine Dichtung zwischen der Gehäusewand und dem Zwischenboden 3 hergestellt werden soll. In den Schwalbenschwanzringnuten 54 befindet sich jeweils ein O-Ring 56, der mit Hilfe eines in die jeweilige Nut eingeführten Druckfluides in Richtung aus der Nut 54 herausgedrückt werden kann und sich auf diese Weise dichtend an den äußeren Rand des Zwischenbodens 3 anlegt, wie an der oberen O-Ringdichtung 56 in Fig. 9b dargestellt.

## Ansprüche

1. Filterapparat, bestehend aus einem aufrechtstehenden, im wesentlichen rotationssymmetrischen, geschlossenen Gehäuse (1) mit wenigstens einer Öffnung (7) im oberen Bereich für die Zuführung der zu filternden Trübe, wenigstens einer Öffnung (9) im Bereich des Gehäusebodens (8) für den Auslaß des Filtrats, einem von einem Zwischenboden (3) in dem Gehäuse (1) abgestützten Filtermittel (41), das den Gehäuseinnenraum in eine obere Trübenkammer (4) und eine untere Filtratkammer (5) unterteilt, und eine in der Trübenkammer (4) angeordnete, benachbart dem Filtermittel (41) umlaufende Glattstreichvorrichtung (27) für den sich im Betrieb des Filterapparats auf dem Filtermittel (41) aufbauenden Filterkuchen, die eine in der Gehäuseachse verlaufende Antriebswelle (29) aufweist, die durch die obere Gehäusewand (6) geführt ist und dort mittels einer Wellendichtung (30) abgedichtet ist, **dadurch gekennzeichnet,** daß der Zwischenboden (3) und das Filtermittel (41) konusförmig ausgebildet sind, der Zwischenboden (3) in dem Gehäuse (1) längs der Gehäuseachse (O) zwischen einer abgesenkten Filtrierstellung und einer angehobenen Entleerungsstellung verschiebbar gelagert ist, die Glattstreichvorrichtung (27) wenigstens zwei Flügel (28) mit einer an den Konus des Filtermittels (41) angepaßten Neigung gegen die Antriebswellenachse (O) aufweist und das Gehäuse (1) im Bereich, die die tiefste Stelle des Filtermittels (41) in der Entleerungsstellung einnimmt, eine Auslaßöffnung (9; 44) aufweist.

2. Filterapparat nach Anspruch 1, **dadurch gekennzeichnet,** daß der Zwischenboden (3) trichterförmig, sich nach unten verengend ausgebildet ist, mit einer Öffnung (11) an seinem unteren Ende, daß die Filterkuchenauslaßöffnung (9) im Gehäuseboden (8) im Zentrum desselben angeordnet ist und daß oberhalb dieser Öffnung (9) ein sich nach oben verengender Kegelkörper (20) am Gehäuseboden (8) abgestützt ist, im Bereich von dessen Rand der Öffnungsrand des Zwischenbodens (3) in der abgesenkten Stellung desselben dichtend anliegt.

3. Filterapparat nach Anspruch 2, **dadurch gekennzeichnet,** daß der Kegelkörper (20) von unten mittels radial verlaufender, in der unteren Gehäuseöffnung (9) abgestützter Rippen (21) abgestützt ist.

4. Filterapparat nach Anspruch 3, **dadurch gekennzeichnet,** daß die Rippen (21) von unten durch einen eine Auslaßöffnung (23) aufweisenden Ring (22) abgestützt sind, der an einem Flansch (25) außen am Gehäuseboden (8) lösbar befestigt ist.

5. Filterapparat nach Anspruch 2, 3 oder 4, **dadurch gekennzeichnet,** daß der Kegelkörper (20) eine zentrische Sackbohrung (34) aufweist, in der ein Wellenzapfen (33) der Antriebswelle (29) der Glattstreichvorrichtung (27) gelagert ist.

6. Filterapparat nach Anspruch 1, **dadurch gekennzeichnet,** daß der Zwischenboden (3) vom Zentrum nach außen abfallend ausgeführt ist, sich in der Seitenwand des Gehäuses (1) die Filterkuchenauslaßöffnung (44) befindet und ein Verschlußelement (43) zum Verschließen dieser Auslaßöffnung (44) während des Filterbetriebes lösbar an der Auslaßöffnung (44) angebracht ist.

7. Filterapparat nach einem der vorhergehenden Ansprüche, **dadurch gekennzeichnet,** daß der Neigungswinkel des Zwischenbodens (3) gegen die Horizontale zwischen etwa 30° und etwa 60° liegt.

8. Filterapparat nach einem der vorhergehenden Ansprüche, **dadurch gekennzeichnet,** daß der Zwischenboden (3) von hydraulischen Hubvorrichtungen (13) abgestützt ist.

9. Filterapparat nach einem der vorhergehenden Ansprüche, **dadurch gekennzeichnet,** daß in dem Gehäuse (1) in einem dem maximalen Hub des Zwischenbodens (3) entsprechenden Abstand zwei nach innen vorstehende Ringe (15, 19) angeordnet sind, an denen ein am äußeren Rand des Zwischenbodens (3) ausgebildeter Flanschring (14) in den unteren und oberen Endstellungen des Zwischenbodens (3) von oben bzw. von unten dichtend anliegt.

10. Filterapparat nach Anspruch 9, **dadurch gekennzeichnet,** daß die Ringe (15, 19) an der Gehäusewand elastisch sind.

11. Filterapparat nach einem der Ansprüche 1 bis 8, **dadurch gekennzeichnet,** daß sich vom äußeren Rand des Zwischenbodens (3) eine flexible und/oder dehnbare, wenigstens für die Feststoffbestandteile der Trübe undurchlässige Membran (45) erstreckt, die an der seitlichen Gehäusewand befestigt ist.

12. Filterapparat nach Anspruch 11, **dadurch gekennzeichnet,** daß die Membran (45) von dem Randbereich des Filtermittels (41) gebildet ist.

13. Filterapparat nach einem der Ansprüche 1 bis 8, **dadurch gekennzeichnet,** daß im Gehäuse (1) an der seitlichen Gehäusewand im Bereich des Außenrandes des Zwischenbodens (3) eine ringförmige Blähkörperdichtungseinrichtung (55) angeordnet ist, die den Außenrand des Zwischenbodens (3) wenigstens in seinen oberen und unteren Endstellungen an der Gehäusewand abdichtet.

14. Filterapparat nach Anspruch 13, **dadurch gekennzeichnet,** daß zwei Blähkörperdichtungsringe (55) in einem dem Maximalhub des Zwischenbodens (3) entsprechenden Abstand innen an der Gehäusewand angeordnet sind.

15. Filterapparat nach einem der vorhergehenden Ansprüche, **dadurch gekennzeichnet,** daß die Glattstreichvorrichtung (27) mit einer in ihrer Drehrichtung umkehrbaren Antriebseinrichtung (31) versehen ist und die Flügel (28) in Umlaufrichtung gesehen einen Winkel mit der Oberfläche des Filtermittels einschließen.

16. Filterapparat nach Anspruch 15, **dadurch gekennzeichnet,** daß die Flügel (28) an der Antriebswelle (29) verstellbar befestigt sind derart, daß der vorgenannte Winkel veränderbar ist.

17. Filterapparat nach einem der vorhergehenden Ansprüche, **dadurch gekennzeichnet,** daß an der Antriebswelle (29) der Glattstreichvorrichtung (27) axial im Abstand von den dem Filtermittel (41) benachbarten Flügeln (28) weitere Flügel (32; 37) zur Beeinflussung der Trübenbewegung in der Trübenkammer (4) befestigt sind.

18. Filterapparat nach Anspruch 17, **dadurch gekennzeichnet,** daß die zusätzlichen Flügel (37) verstellbar an der Antriebswelle (29) befestigt sind.

19. Filterapparat nach einem der vorhergehenden Ansprüche, **dadurch gekennzeichnet,** daß an der oberen Wand (6) des Gehäuses (1) Strömungsleitelemente (35) verstellbar befestigt sind, die in die Trübenkammer (4) hineinragen.

EP 0 305 575 A1

FIG.1

FIG.2

FIG.3

FIG.4

FIG.6

FIG.5

**FIG.7**

**FIG.8**

FIG.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CH-A- 426 731 (G. ZWICKY)<br>* Seite 1, Zeilen 61-69; Seite 2, Zeilen 75-85; Seite 3, Zeilen 67-76 *<br>--- | 1,2,8, 10 | B 01 D 29/02<br>B 01 D 29/38 |
| A | US-A-4 130 478 (D.M. SWALLOW)<br>* Spalte 4, Zeilen 13-24; Spalte 4, Zeilen 51-59 *<br>--- | 1,5 | |
| A | FR-A-2 091 358 (BAYER)<br>* Seite 8, Zeilen 1-15; Seite 6, Zeilen 18-32 *<br>--- | 1,8 | |
| A | EP-A-0 026 261 (BORCHERT et al.)<br>* Seite 7, Zeilen 33-35; Seite 8, Zeilen 1-11 *<br>--- | 1 | |
| A | GB-A-2 084 890 (NIPPON DYEING MACHINE MFG CO.)<br>* Seite 5, Zeilen 68-89 *<br>----- | 1,15,16 | |

| | RECHERCHIERTE SACHGEBIETE (Int. Cl.4) |
|---|---|
| | B 01 D |

Der vorliegende Recherchenbericht wurde für alle Patentansprüche erstellt

| Recherchenort | Abschlußdatum der Recherche | Prüfer |
|---|---|---|
| DEN HAAG | 29-02-1988 | KERRES P.M.G. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument